Europäisches Patentamt

European Patent Office

Office européen des brevets

(19)

(11) Publication number: **0 034 460**
**B1**

# EUROPEAN PATENT SPECIFICATION

(12)

(45) Date of publication of patent specification: **21.08.85**

(51) Int. Cl.⁴: **H 02 K 1/10,** H 02 K 23/40

(21) Application number: **81300542.8**

(22) Date of filing: **10.02.81**

(54) **Direct current motor having E-shaped interpoles.**

(30) Priority: **12.02.80 JP 15674/80**

(43) Date of publication of application:
**26.08.81 Bulletin 81/34**

(45) Publication of the grant of the patent:
**21.08.85 Bulletin 85/34**

(84) Designated Contracting States:
**DE FR GB**

(56) References cited:
**EP-A-0 017 109
DE-C- 420 406
DE-C- 948 431
GB-A-1 160 627**

(73) Proprietor: **FANUC LTD**
**3580, Shibokusa Aza-Komanba Oshino-mura
Minamitsuru-gun Yamanashi 401-05 (JP)**

(72) Inventor: **Kohzai, Yoshinori**
**16-3, Hirayama 2-chome Hino-shi
Tokyo (JP)**
Inventor: **Koyama, Tatsuo**
**241-106, 3-1-1, Tamadaira Hino-shi
Tokyo (JP)**
Inventor: **Oyama, Shigeaki**
**Dai-2 Kamyu Hachioji 1-9-4-102, Myojin-cho
Hachioji-shi Tokyo (JP)**

(74) Representative: **Abbott, Leonard Charles et al
GILL JENNINGS & EVERY 53-64 Chancery Lane
London WC2A 1HN (GB)**

Courier Press, Leamington Spa, England.

## Description

This invention relates to a direct current motor having E-shaped interpoles, and more particularly to a low noise direct current electric motor for use, for example, in a machine tool.

In order to reduce the magnetomotive force produced by the interpoles and to improve various operating characteristics of a DC motor, a motor having E-shaped interpoles has been proposed in, for example, our Japanese laid-open Patent Application No. 53-126107, corresponding to U.S. Patent No. 4 220 882.

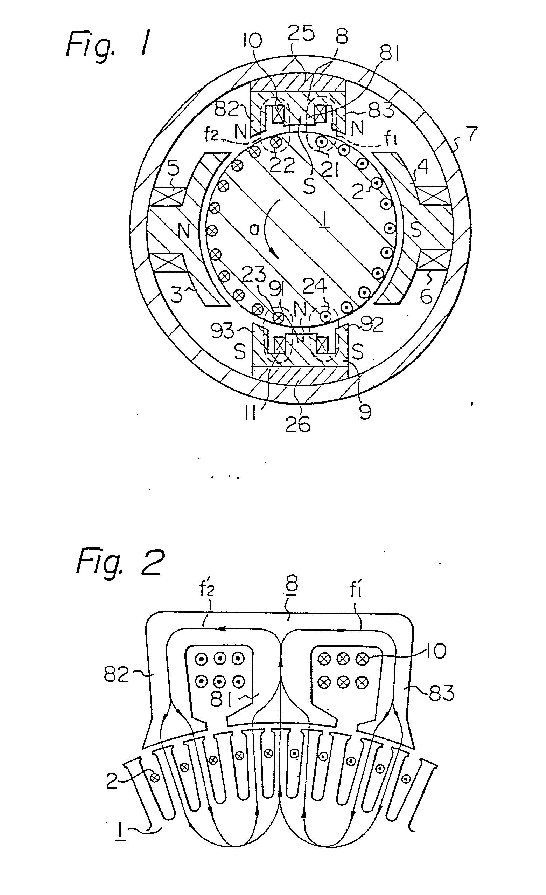

Fig. 1 of the accompanying drawings illustrates a prior art DC motor having E-shaped interpoles as disclosed in the above-mentioned patent application. The DC motor in Fig. 1 comprises an armature 1, a cylindrical yoke 7 and two main magnetic poles 3 and 4 equidistantly spaced around the outer circumference of the armature 1 having a small gap therebetween and attached to the inner circumference of the yoke 7. The main magnetic poles 3 and 4 have field windings 5 and 6 wound thereon, respectively. The field windings 5 and 6 are supplied with electric current in a predetermined direction so that the polarities of the main magnetic poles 3 and 4 are selected to be, for example, north and south (N and S), respectively. As a result, the armature 1 rotates counter-clockwise, as shown by an arrow a. In this case, some of the armature windings 21, 22 and 23, 24, which are located between the main magnetic poles 3 and 4, exist within commutating zones.

In order to eliminate the counter electromotive force induced in the armature windings 21 to 24 which are within commutating zones, E-shaped interpoles 8 and 9 are attached to the inner circumference of the yoke 7 by using spacers 25 and 26 made of non-magnetic material, and are located at intermediate positions along the outer circumference of the armature 1 between the main magnetic poles 3 and 4. The interpole 8 comprises a centre pole 81 having an interpole winding 10 thereon, and two side poles 82 and 83 disposed respectively in front of and to the rear of the centre pole 81 along the direction of rotation of the armature 1. The interpole winding 10 is connected in series with the armature windings 2, and an armature current passes through the interpole winding 10 in such a direction so that the polarity of the centre pole 81 becomes S and the polarity of the side poles 82 and 83 becomes N. The other interpole 9 also comprises a centre pole 91 having an interpole winding 11 thereon, and two side poles 92 and 93. The interpole winding 11 is also connected in series with the armature windings 2, and the direction of the armature current passing through the interpole winding 11 is selected so that the polarity of the centre pole 91 becomes N and the polarity of the side poles 92 and 93 becomes S.

The E-shaped interpoles 8 and 9 are hardly affected by the magnetic field produced by armature reaction. This is because the magnetic flux caused by the whole of the armature current flowing through the armature windings 2 hardly penetrates the interpoles 8 and 9 due to the existence of the spacers 25 and 26 of nonmagnetic material. For example, in the interpole 8, only magnetic fluxes $f_1$ and $f_2$, which are caused by the current passing through armature windings 21 and 22 existing within a commutating zone, pass through the magnetic circuit including the centre pole 81, side poles 82 and 83 of the interpole 8 and the armature 1. Thus, the amount of the magnetomotive force produced by the E-shaped interpoles 8 and 9 can be greatly reduced and, therefore, the cross sectional area of the interpole winding can be very small and the heat generated by the interpoles can be reduced.

In the above-described E-shaped interpoles, for example the interpole 8, the interpole winding 10 is connected in series with the armature windings 2 in the direction such that the magnetic flux produced by the interpole winding 10 has the opposite polarity to that of the above-mentioned magnetic fluxes $f_1$ and $f_2$, in order to eliminate the magnetic flux $f_1$ and $f_2$ and to generate the magnetic flux used for commutation. Consequently, as illustrated in Fig. 2, magnetic fluxes $f_1'$ and $f_2'$, the magnitudes of which are equal to the difference between the magnetic flux produced by the interpole winding 10 and the magnetic fluxes $f_1$ and $f_2$ produced by the armature windings existing in a commutating zone, pass through magnetic circuits comprising the centre pole 81 and the side poles 82 and 83 of the E-shaped interpole 8 and the armature 1. The magnetic fluxes $f_1'$ and $f_2'$ cause an attractive force to be produced between each of the teeth of the armature 1 and the side poles 82 and 83 and the centre pole 81 of the E-shaped interpole 8. Especially, the attractive force between each of the teeth of the armature 1 and the side poles 82 and 83, the magnetic flux density of which is relatively high, is very large.

When the armature 1 rotates, each of the teeth of the armature 1 approaches and departs from the side poles 82 and 83 of the E-shaped interpole 8. Therefore, the side poles 82 and 83 undergo an alternating force the direction of which changes alternately. The repetition frequency of the alternating force changes in proportion to the revolution speed of the armature 1 and the magnitude of the alternating force is in proportion to the magnitude of the armature current. In the condition that the load of the DC motor is heavy or in the condition that the revolution speed of the armature 1 is accelerating or decelerating, the armature current becomes very large, so that the alternating force becomes very large. Therefore, in the conventional DC motor having E-shaped interpoles, the side poles of the E-shaped interpoles vibrate at a relatively high frequency corresponding to the repetition frequency of the alternating force. Hence, the conventional DC motor generates a loud noise.

German Patent Specification No. 420 406 discloses another such electric machine having E-shaped interpoles.

It is an object of the present invention to reduce the noise generated by vibration of the side poles of the E-shaped interpoles of a DC motor.

In order to reduce the noise problem of the conventional DC motor having E-shaped interpoles, the motor of the present invention uses side poles which are mechanically interconnected to the centre pole of the E-shaped interpole.

According to the present invention, a DC motor comprising an armature rotatable around a central axis thereof, and having armature windings wound thereon, a plurality of main magnetic poles disposed around the armature and having field windings thereon, and a plurality of E-shaped interpoles disposed at intermediate positions round the outer circumference of the armature between adjacent main magnetic poles, each of the E-shaped interpoles having a centre pole with an interpole winding, and two side poles, is characterised in that each of the E-shaped interpoles further comprises interconnecting members of rigid material which are tightly wedged in respective gaps between the centre pole and the side poles, thereby mechanically interconnecting the side poles to the centre pole to reduce vibration of the side poles.

An embodiment of the invention will now be described, by way of example, with reference to the accompanying drawings, in which:

Fig. 1 is a cross-sectional view of a conventional direct current motor having E-shaped interpoles as described above,

Fig. 2 is a partial cross-sectional view which illustrates a part of the conventional direct current motor of Fig. 1 and which was used above for explaining the operation of the conventional E-shaped interpoles;

Fig. 3 is a partial cross-sectional view which illustrates a part of a direct current motor according to the present invention;

Fig. 4 is a partial cross-sectional view which illustrates, on an enlarged scale, a part of an E-shaped interpole used in the motor of Fig. 3, and

Figs. 5A and 5B are graphs which illustrate noise characteristics of the conventional DC motor having E-shaped interpoles and the DC motor having E-shaped interpoles according to the present invention, respectively.

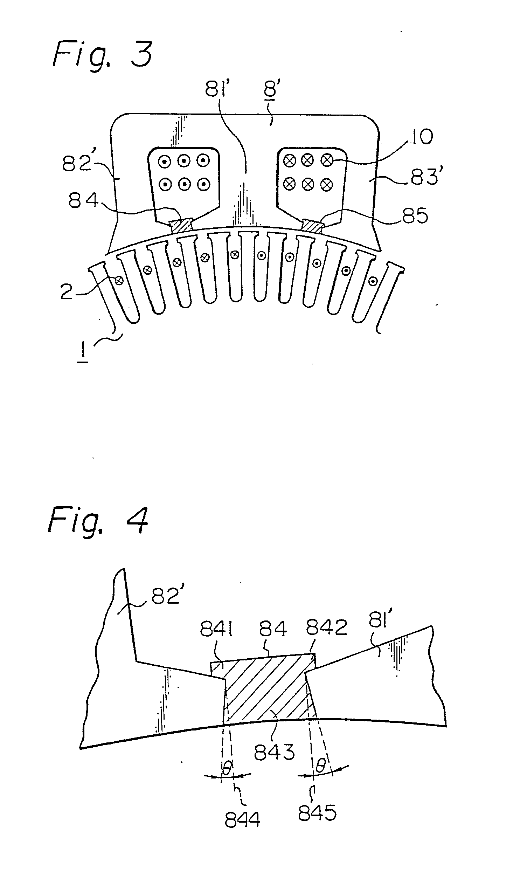

With reference to the drawings, an embodiment of the present invention will now be described. Fig. 3 illustrates a part of a DC motor having E-shaped interpoles according to the present invention. In Fig. 3, only an E-shaped interpole 8' and a part of an armature 1 are shown. The other portions of the DC motor are the same as those of the conventional DC motor of Fig. 1 except for an E-shaped interpole 9' which it not shown in Fig. 3 but which has the same structure as the E-shaped interpole 8'. The E-shaped interpole 8' of Fig. 3 comprises a centre pole 81', side poles 82' and 83', and an interpole winding 10 wound on the centre pole 81'. The E-shaped interpole 8' of Fig. 3 further comprises wedge-shaped members 84

and 85 which are tightly and substantially irremovably inserted in gaps between the centre pole 81' and the side poles 82' and 83', for example in gaps between a pole shoe portion of the centre pole 81' and pole shoe portions of the side poles 82' and 83', respectively. Each of the wedge-shaped members 84 and 85 is made of a non-magnetic material having rigidity, for example brass, copper, plastics or stainless steel. The wedge-shaped members 84 and 85 mechanically interconnect the side poles 82' and 83', at the end portions thereof, to the centre pole 81' and help to prevent mechanical vibration of the side poles 82' and 83'.

Fig. 4 is an enlarged view of a part of the E-shaped interpole 8' of Fig. 3. The above-mentioned wedge-shaped member 84 comprises projections 841 and 842 and a wedge portion 843. The width of the wedge portion 843 of the wedge-shaped member 84 increases from the portion remote from the armature 1 to the portion adjacent the armature 1 so that it has small taper angles $\theta$ relative to parallel lines 844 and 845. The projections 841 and 842 are formed at the narrow end of the wedge-shaped member 84. A gap between the pole shoe portion of the centre pole 81' and the pole shoe portion of the side pole 82' also increases from the portion remote from the armature 1 to the portion adjacent to.the armature 1 similarly to the wedge-shaped member 84. Therefore, the wedge-shaped member 84 tightly fits into the gap and does not come out therefrom. It should be noted that the vibration of the side poles 82' and 83' can be effectively suppressed when the interconnecting members 84 and 85 are inserted in the gaps between the end portions, i.e. the pole shoe portions, of the side poles 82' and 83' and the end portion, i.e. the pole shoe portion, of the centre pole 81'.

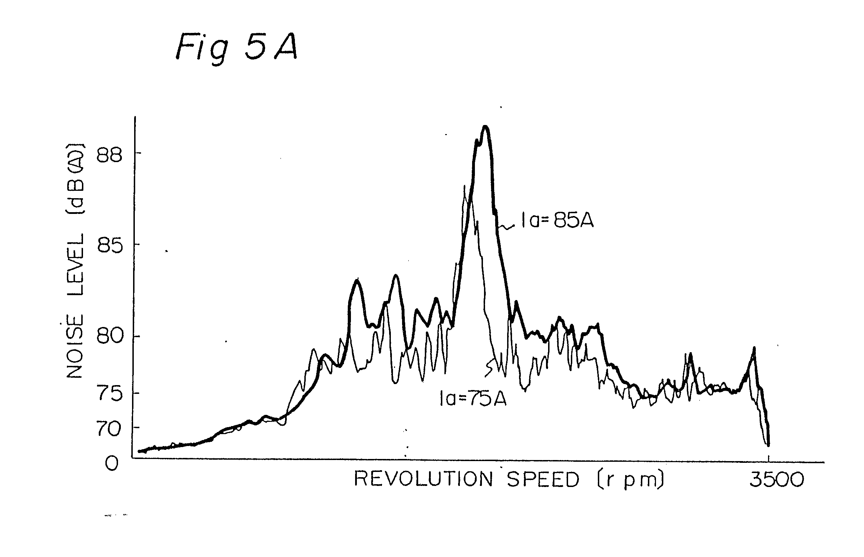

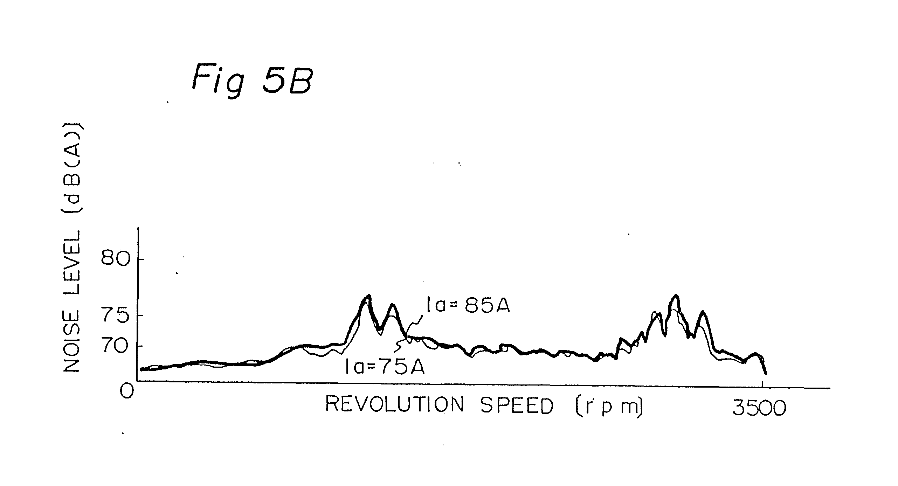

Figs. 5A and 5B illustrate characteristics of the noise produced by a conventional DC motor having E-shaped interpoles and by the DC motor having E-shaped interpoles according to the present invention, respectively. The graphs in Figs. 5A and 5B show noise levels generated by each of the DC motors when the speed of rotation of the rotor is varied between zero and 3500 rpm (revolutions per minute). Each figure shows curves for two constant armature current values, namely 75A and 85A. The noise level is measured at a distance of about 1 metre from the DC motor in a direction perpendicular to the shaft of the rotor. The noise level is shown in units of dB(A), where (A) represents a type of weighting curve of a frequency characteristic used in noise measurement. The weighting curve of type A, which is used in the above-mentioned noise measurement, has a frequency characteristic approximately similar to that of a human ear.

As illustrated in Fig. 5A, the conventional DC motor generates salient peak noise near a particular speed of rotation (approximately 1800 rpm) and, moreover, generates noises of a relatively high level throughout the whole range of speeds. Especially when the armature current is higher

($I_a = 85A$), the noise becomes very loud.

On the other hand, as illustrated in Fig. 5B, the noise level in the DC motor according to the present invention is very low throughout the whole speed range, and a salient peak noise is not generated from the motor.

As explained above, the DC motor having E-shaped interpoles according to the present invention comprises wedge-shaped members which are tightly and irremovably inserted between the centre poles and the side poles of the E-shaped interpoles and which are made of a rigid material. Therefore, each of the side poles is mechanically interconnected to the corresponding centre pole, so that the noise generated by vibration of the side poles is greatly reduced, even when the armature current is large, that is, even when the load on the motor is heavy.

## Claims

1. A direct current motor comprising an armature (1) rotatable around a central axis thereof and having armature windings (2) thereon; a plurality of main stator magnetic poles (3, 4) disposed around the armature (1) and having field windings (5, 6) thereon; and a plurality of E-shaped stator interpoles (8', 9') disposed at intermediate positions round the outer circumference of the armature (1) between adjacent main magnetic poles, each of the E-shaped interpoles (8', 9') having a centre pole (81') with an interpole winding (10) thereon and two side poles; (82', 83') characterised in that each of the E-shaped interpoles (8', 9') further comprises interconnecting members (84, 85) of rigid material which are tightly wedged in respective gaps between the centre pole (81') and the side poles (82', 83'), thereby mechanically interconnecting the side poles to the centre pole to reduce vibration of the side poles.

2. A motor as claimed in Claim 1, characterised in that each of the interconnecting members (84, 85) is inserted in a gap between a pole shoe portion of the centre pole (81') and a pole shoe portion of the side pole (82', 83').

3. A motor as claimed in Claim 2, characterised in that each of the interconnecting members (84, 85) is a wedge-shaped member having a wedge portion (843) and projections (841, 842) at the narrow end thereof; and in that the width of the gap increases from a portion remote from the armature to a portion adjacent the armature corresponding to the shape of the wedge-shaped member, each of the interconnecting members being retained within the gap by the projections and the wedge portion.

4. A motor as claimed in Claim 1, Claim 2 or Claim 3, characterised in that the interconnecting members (84, 85) are made of non-magnetic material.

## Revendications

1. Moteur à courant continu comprenant un induit (1) pouvant tourner sur son axe central et portant des enroulements d'induit (2); plusieurs pôles magnétiques principaux de stator (3, 4) disposés autour de l'induit (1) et portant des enroulements de champ (5, 6); et plusieurs pôles de commutation de stator en forme de E (8', 9') disposés en des positions intermédiaires sur la circonférence extérieure de l'induit (1) entre pôles magnétiques principaux adjacents, chacun des pôles de commutation en forme de E (8', 9') possédant un pôle central (81'), portant un enroulement (10) de pôle de commutation, et deux pôles latéraux (82', 83'); caractérisé en ce que chacun des pôles de commutation en forme de E (8', 9') comprend en outre des éléments d'interconnexion (84, 85) faits d'un matériau rigide qui sont fermement coincés dans des entrefers respectifs formés entre le pôle central (81') et les pôles latéraux (82', 83'), de manière à mécaniquement interconnecter les pôles latéraux avec le pôle central pour réduire les vibrations des pôles latéraux.

2. Moteur selon la revendication 1, caractérisé en ce que chacun des éléments d'interconnexion (84, 85) est inséré dans un entrefer formé entre un épanouissement polaire du pôle central (81') et un épanouissement polaire du pôle latéral (82', 83').

3. Moteur selon la revendication 2, caractérisé en ce que chacun des éléments d'interconnexion (84, 85) est un élément en forme de coin possédant une partie coin (843) et des parties saillantes (841, 842) à son extrémité étroite; et en ce que la largeur de l'intrefer augmente d'une partie éloignée de l'induit à une partie voisine de l'induit en correspondance avec la forme de l'élément en forme de coin, chacun des éléments d'interconnexion étant retenu à l'intérieur de l'entrefer par les parties saillantes et la partie en forme de coin.

4. Moteur selon la revendication 1, 2 ou 3, caractérisé en ce que les éléments d'interconnexion (84, 85) sont faits en un matèriau non magnétique.

## Patentansprüche

1. Gleichstrommotor, umfassend einen um seine Mittelachse drehbaren und Ankerwicklungen (2) tragenden Anker (1), eine Vielzahl von Haupt-Statormagnetpolen (3, 4), die um den Anker (1) herum angeordnet sind und Feldwicklungen (5, 6) tragen, und eine Vielzahl von E-förmigen Stator-Wendepolen (8', 9'), die an mittleren Stellen um den äußeren Umfang des Ankers (1) zwischen benachbarten Hauptmagnetpolen angeordnet sind und von denen jeder E-förmige Wendepol (8', 9') einen Mittelpol (81'), auf dem sich eine Wendepolwicklung (10) befindet und zwei Seitenpole (82', 83') aufweist, dadurch gekennzeichnet, daß jeder der E-förmigen Wendepole (8', 9') ferner Zwischenverbindungsglieder (84, 85) aus einem starren Material umfaßt, die fest in jeweiligen Spalten zwischen dem Mittelpol (81') und den Seitenpolen (82', 83') verkeilt sind und dadurch die beiden Seitenpole mechanisch mit dem Hauptpol verbinden, um Vibrationen der Seitenpole zu reduzieren.

2. Motor nach Anspruch 1, dadurch gekennzeichnet, daß jedes der Zwischenverbindungsglieder (84, 85) in einen Spalt zwischen einem Polschuhteil des Mittepols (81') und einem Polschuhteil des Seitenpols (82', 83') eingesetzt ist.

3. Motor nach Anspruch 2, dadurch gekennzeichnet, daß jedes der Zwischenverbindungsglieder (84, 85) ein keilförmiges Glied mit einem Keilteil (843) und Vorsprüngen (841, 842) an dessen schmalem Ende ist, und daß die Breite des Spalts von einem dem Anker abgewandten Teil zu einem dem Anker benachbarten Teil der Form des keilförmigen Glieds entspricht und jedes der Zwischenverbindungsglieder durch die Vorsprünge und den Keilteil innerhalb des Spalts festgehalten wird.

4. Motor nach Anspruch 1, Anspruch 2 oder Anspruch 3, dadurch gekennzeichnet, daß die Zwischenverbindungsglieder (84, 85) aus nichtmagnetischem Material bestehen.

*Fig. 1*

*Fig. 2*

1

Fig. 3

81'  8'

82'

84

10

83'

85

2

1

Fig. 4

82'

841  84  842  81'

843

θ  θ

844  845

Fig 5 A

0 034 460

## Fig 5B

NOISE LEVEL (dB(A))

80

75
70

Ia=85A

Ia=75A

0

REVOLUTION SPEED (rpm)

3500